# EUROPEAN PATENT APPLICATION

(11) **EP 4 505 915 A2**
(43) Date of publication of application: **12.02.2025**
(21) Application number: 24189776.8
(22) Date of filing: 19.07.2024
(51) Int. Cl.: A47J 31/36, A47J 31/52, A47J 31/42

(54) **COFFEE MACHINE**

(30) Priority: 10.08.2023 NL 2035584
(71) Applicant: Bravilor Bonamat BV, 1704 RD Heerhugowaard (NL)
(72) Inventor: VERHOEVEN, Lorenzo Romanus, 1704 RD Heerhugowaard (NL); TEUNISSEN, Kuno, 1704 RD Heerhugowaard (NL)
(74) Representative: van Breda, Jacobus

(57) **Abstract**

Coffee machine provided with a brewer, which brewer is provided with a brewing chamber which is equipped for receiving ground coffee, and which brewer is equipped with a piston which is movable in the brewing chamber for tamping the ground coffee, wherein the coffee machine is further provided with an input interface enabling an operator to select a desired amount of ground coffee to be supplied to the brewing chamber, and to select an amount of brewing water to be used during extraction of the coffee, wherein the input interface is equipped to receive a setpoint for a desired extraction time, and that the coffee machine is further provided with a flowmeter for measuring an actual flow of the brewing water during extraction, wherein the flowmeter is connected to a controller, and the controller is arranged to drive the piston to a position which causes the actual flow of the brewing water to be set at a value which corresponds to eventually using the full amount of brewing water in exactly the desired extraction time.

## Description

The invention relates to a coffee machine provided with a brewer, which brewer is provided with a brewing chamber which is equipped for receiving ground coffee, and which brewer is equipped with a piston which is movable in the brewing chamber for tamping the ground coffee, wherein the coffee machine is further provided with an input interface enabling an operator to select a desired amount of ground coffee to be supplied to the brewing chamber, and to select an amount of brewing water to be used during extraction of the coffee.

KR 101595472 discloses such a coffee machine, wherein a service technician applies the required settings of the machine. The technician sets the temperature setting, the pump and the steam pressure, that is the boiler water temperature, coffee extract water temperature, cylinder temperature, hot water temperature, coffee extraction pressure, steam pressure etc. After that, the piston position and water are controlled. The position of the piston is divided by numbers, and when the desired number is entered, the piston stops at the position of the number and gives water. This entire process is operator controlled and therefore rather complicated and cumbersome.

In general the preparation of coffee, or in particular espresso, in the traditional way requires a lot of input from a barista. The extraction time is closely monitored and if a deviation is seen, the grinder is adjusted to adjust the properties of the ground coffee (fineness of the grind). A finer grind gives more resistance to the water. With a coarse grind, there is more air between the coffee grains, which gives more space for the water to flow along the coffee particles. The finer the grinding degree and therefore the more compact the coffee, the more difficult it is for the water to flow through the coffee pill.

The barista essentially controls the extraction time by varying the voids between the coffee grains. In many cases, prior art coffee vending machines use a restriction to exclude the coffee pill as a variable. This method does not follow the real espresso principle and therefore detracts from the quality of the drink. There are machines that use the same method as a barista. With such machines, the extraction time is controlled by adjusting the grinder, using a control system to keep the average extraction time constant.

A major disadvantage of changing the grain size to influence the extraction time is that this not only affects the extraction time, but also the taste and other factors that are then also, albeit unintentionally, changed. Setting the grind finer can, for example, extend the extraction time, but may also facilitate the degree to which the coffee grind can be brewed, due to the larger total surface area of the grains, while the extraction time is only marginally extended by the change in grind size.

An additional shortcoming of such a system is that variations between settings of the machine cannot be mutually corrected. If, for example, a channel arises in a ground coffee pill during a setting (so-called channeling) or another abnormality occurs, there is no way to intervene. The setting of the coffee in question will therefore most likely not be to the liking of the consumer.

The invention aims at providing a solution to the above-mentioned problems, and proposes therefore a coffee machine with the features of one or more of the appended claims.

In a first aspect of the invention, the input interface is equipped to receive a setpoint for a desired extraction time, and the coffee machine is further provided with a flowmeter for measuring an actual flow of the brewing water during extraction, wherein the flowmeter is connected to a controller, and the controller is arranged to drive the piston to a position which causes the actual flow of the brewing water to be set at a value which corresponds to eventually using the full amount of brewing water in exactly the desired extraction time. By according to the invention not tuning the grinder, but by varying the pressure that the piston exerts on the coffee pill, the taste of the coffee can remain more consistent over different recipes and the taste will also remain consistent over a longer period of time.

The invention actually provides that the coffee machine is self-adjusting to the required parameter settings, with the big advantage that the fineness of the ground coffee can be left unaffected, and that in the long run any wear and tear of the grinder resulting in a different grain size, will be automatically compensated in the coffee machine of the invention. A re-calibration of the grinder is only required when compensation by the coffee machine of the invention exceeds its control range.

According to the invention it is therefore achieved that a size of crushed particles in the ground coffee is maintained constant in between different settings of coffee according to a predefined recipe.

The invention also provides the advantage that entering a new recipe in the coffee machine is simplified and that any recipe is defined by the following parameters only, which parameters pertain to one setting of coffee, to note:
- a desired amount of ground coffee to be supplied to the brewing chamber,
- an amount of brewing water to be used during extraction of the coffee, and
- a desired extraction time,
wherein for any new recipe an estimated desired piston position is established by measuring an actual flow of brewing water with a particular setting of the piston position and a preset weight of the ground coffee according to the new recipe, which estimated desired piston position is used as an initial setting of the piston during a first regular setting of coffee according to this new recipe.

When establishing a new recipe in the coffee machine of the invention it is preferred to apply a calibration step that precedes the actual execution of any such new recipe, wherein the machine estimates a grain size of the ground coffee, which grain size is used to establish an optimum size of the brewing chamber in relation to the amount of ground coffee to be received therein, and to establish whether the grinder is in its optimal working range (preferably 300 - 400 µm).

One of the notable features of the invention is that the calibration step comprises exercising full force with the piston on a known amount of ground coffee received in the brewing chamber, and determining the piston position that corresponds to said exercising of full force, wherein this piston position is used as a measure for the grain size of the ground coffee.

After the calibration for setting up a new recipe, a first (or following) cup of coffee can be made from such recipe. In connection therewith it is preferable that the input interface is equipped to ask the user one or more of the following questions:
- is the coffee: sour, bitter, good?
- is the coffee strong, weak, good?
- is the volume too small, big, good?
- is the coffee too cold, hot, good?
- is the crema layer too thin, thick, good?
and that the interface is arranged to provide the user advice on settings of certain parameters of the coffee machine depending on input received from the user through the interface.

When one or more of the beforementioned questions is answered other than satisfactory (good), the machine can also be arranged to autonomously change any of the following parameters to achieve a satisfactory beverage recipe
- Increase or decrease brew water temperature.
- Set finer grind or courser grind.
- Reduce or increase the amount of ground coffee.
- Increase or decrease extraction time.
- Increase or decrease brew water volume

The coffee machine registers to what extent all these parameters have already been set to their maximum or minimum value. For example, if the water temperature is already 97 degrees, there is no point in raising it even further. The coffee machine also keeps track of the degree of grinding. If the grinding degree is already very fine, there is no point in further increasing the grinding degree.

When the coffee is experienced as sour, in many cases there is under-extraction. One or more of the following actions can correct this:
- Increase water temperature.
- Set finer grind.
- Reduce the amount of ground coffee.
- Increase extraction time.

When the coffee is experienced as bitter, there is usually over-extraction and the actions must be carried out in the opposite way as when there is under-extraction, i.e.
- Lower water temperature
- Set coarser grind
- Increase the amount of ground coffee
- Shorten extraction time.

In this case, too, the machine keeps track of the values of all parameters and advice can be given on the basis thereof.

As mentioned above, the coffee machine can be arranged to ask the user one or more of the following questions, after which appropriate action can be taken:
- Is the coffee strong, weak, good?
- Is the volume too small, big, good?
- Is the coffee too cold, hot, good?
- Is the crema layer too thin, thick, good?

Grind size, extraction time, dosage amount, water volume and temperature all influence these factors.

Based on these questions, the user can be guided to fine-tune the cup of coffee to be prepared as desired in order to get optimum results from the coffee machine of the invention.

In another aspect of the invention the input interface enables an operator to dispose of a remaining amount of ground coffee from the grinder, when a predefined time has passed since the last setting of coffee. This addresses the problem that the coffee left in the grinder has had time to evaporate and absorb moisture during a previous period of time. This coffee has lost taste and aromas and the brewing properties have changed, and is therefore better disposed of. The disposed coffee can directly fall in the waste bin.

The proposed function according to the previous paragraph has been devised in order to be able to deliver good and consistent quality even during the first setting of coffee. When this function is activated, the user can set a time limit after which the coffee in the grinder will be labeled as too old. When this limit is exceeded (for example when the next setting is requested more than 8 hours after the last setting), the contents of the grinder (a few grams) will be dosed into the waste bin at the next setting.

Another preferable feature is that prior to extraction of the ground coffee, a predefined minute amount of brewing water preheats at least part of the coffee machine. By doing this, cooled water is driven out of the pipes and valves and the pipes, brewer parts and valve of the coffee machine are preheated. Especially with small brews of only 15-60 ml, the otherwise existing cooling has an adverse effect on the quality of the brew.

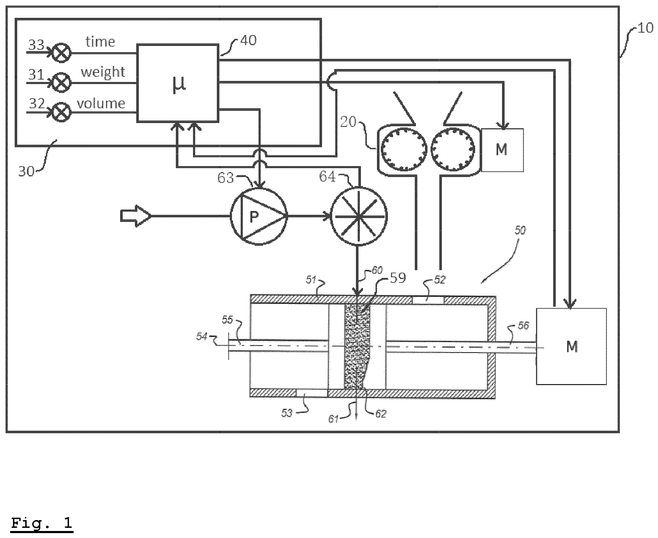

The accompanying drawing, which is incorporated into and forms a part of the specification, illustrates one or more embodiments of the present invention and, together with the description, serves to explain the principles of the invention. The drawing is only for the purpose of illustrating one or more embodiments of the invention and is not to be construed as limiting the invention.

In the drawing a single figure shows schematically a coffee machine according to the invention.

The coffee machine 10 of the invention comprises amongst others a grinder 20, an interface 30 for setting different parameters of the machine that define the desired setting of a cup coffee, a controller 40, and a brewer 50.

The brewer 50 comprises a housing 51 with a filling opening 52 for receiving ground coffee from a grinder 20, an ejection opening 53 and a pair of compression elements in the form of pistons 55, 56 displaceable along a longitudinal axis 54. It is also possible to provide the brewer 50 with a single piston 56, and to provide the ejection opening 53 straight below the filling opening 52, with additional features to secure that the ejection opening 53 is closed during tamping with the piston 56 and during brewing.

In the shown embodiment with two pistons, the pistons 55, 56 can be displaced away from each other so as to assume positions on opposite sides of the filling opening 52, wherein ground coffee 58 can be introduced in the brewing chamber 59 between the pistons 55, 56 that are then - as just said - on opposite sides of the filling opening 52.

In order to tamp the ground coffee 58 the pistons 55, 56 are thereafter displaced toward each other to a position as shown in the figure, so that the ground coffee 58 gets compressed into a tablet or pill in the coffee extraction position that the figure shows.

Hot water is then squeezed through the brewing chamber 59 by pump 63 which connects upstream to a (not-shown) boiler and downstream via supply line 60 with the brewing chamber 59, from which the extracted coffee is discharged through line 61. Supply line 60 is provided with a flow meter 64 for measuring the actual flow of hot water through the brewing chamber 59 during extraction of the coffee.

The figure further shows that the coffee machine 10 is provided with an input interface 30 enabling an operator to select a desired amount 31 of ground coffee to be supplied with the grinder 20 to the brewing chamber 59, and to select an amount 32 of brewing water to be used during extraction of the coffee.

It is further shown that the input interface 30 is equipped to receive a setpoint 33 for a desired extraction time. As mentioned above the coffee machine 10 is provided with a flowmeter 64 for measuring an actual flow of the brewing water during extraction, wherein the flowmeter 64 is connected to the controller 40, and which controller is arranged to drive the piston 56 to a position which causes the actual flow of the brewing water to be set at a value which corresponds to eventually using the full desired amount 32 of brewing water in exactly the desired extraction time 33.

An important feature of the invention is that in this way a grain size of crushed particles in the ground coffee can be maintained constant in between different settings of coffee according to a predefined recipe.

The invention further provides the beneficial feature that any recipe is defined by the aforementioned parameters, said parameters only pertaining to one setting of coffee, to note:
- a desired amount 31 of ground coffee to be supplied to the brewing chamber 59,
- an amount 32 of brewing water to be used during extraction of the coffee, and
- a desired extraction time 33,
wherein for any new recipe an estimated desired position of the piston 56 is established by measuring with the flowmeter 64 an actual flow of brewing water at a particular setting of the piston 56 position and a preset weight 31 of the ground coffee according to the new recipe, which estimated desired piston position is used as an initial setting of the piston 56 during a first regular setting of coffee according to this new recipe.

When establishing a new recipe in the coffee machine of the invention it is preferred to apply a calibration step that precedes the actual execution of any such new recipe, wherein the machine 10 estimates a grain size of the ground coffee, which grain size is used to establish an optimum size of the brewing chamber 59 in relation to the amount of ground coffee to be received therein, and to establish whether the grinder 20 is in its optimal working range (preferably 300-400 pm).

One of the notable features of the invention is that the calibration step comprises exercising full force with the piston 56 on a known amount of ground coffee received in the brewing chamber 59, and determining the piston 56 position that corresponds to said exercising of full force, wherein this piston 56 position is used as a measure for the grain size of the ground coffee.

Further the invention provides for the following beneficial aspects of the coffee machine according to the invention, to note:
- that the input system enables an operator to dispose of a remaining amount of ground coffee from the grinder 20, when a predefined time has passed since the last setting of coffee, and
- that prior to extraction of the ground coffee, a predefined minute amount of brewing water preheats the coffee machine.

Embodiments of the present invention can include every combination of features that are disclosed herein independently from each other. Although the invention has been discussed in the foregoing with reference to an exemplary embodiment of the invention, the invention is not restricted to this particular embodiment which can be varied in many ways without departing from the invention. The discussed exemplary embodiment shall therefore not be used to construe the append-ed claims strictly in accordance therewith. On the contrary the embodiment is merely intended to explain the wording of the appended claims without intent to limit the claims to this exemplary embodiment. The scope of protection of the invention shall therefore be construed in accordance with the appended claims only, wherein a possible ambiguity in the wording of the claims shall be resolved using this exemplary embodiment.

Variations and modifications of the present invention will be obvious to those skilled in the art and it is intended to cover in the appended claims all such modifications and equivalents. The entire disclosures of all references, applications, patents, and publications cited above are hereby incorporated by reference. Unless specifically stated as being "essential" above, none of the various components or the interrelationship thereof are essential to the operation of the invention. Rather, desirable results can be achieved by substituting various components and/or reconfiguration of their relationships with one another.

One appreciable feature is that following the calibration to start with a new recipe, the coffee machine may be arranged to ask the user specific questions after a cup of coffee according to a new recipe has been prepared, such as:
- Is the coffee: sour, bitter, good?

When the coffee is experienced as sour, in many cases there is under-extraction. The following actions can correct this:
- Increase water temperature.
- Set finer grind.
- Reduce the amount of ground coffee.
- Increase extraction time.

The coffee machine registers to what extent all these parameters have already been set to their maximum value. For example, if the water temperature is already 97 degrees, there is no point in advising the user to raise it even further. The coffee machine also keeps track of the degree of grinding. If the grinding degree is already very fine, there is no point in advising to further increase the grinding degree.

When the coffee is experienced as bitter, there is usually over-extraction and the actions must be carried out in the opposite way as when there is under-extraction, i.e.
- Lower water temperature
- Set coarser grind
- Increase the amount of ground coffee
- Shorten extraction time.

In this case, too, the machine keeps track of the values of all parameters and advice can be given on the basis thereof.

The coffee machine can be arranged to ask the user the following further questions, after which appropriate action can be taken:
- is the coffee strong, weak, good?
- is the volume too small, big, good?
- is the coffee too cold, hot, good?
- is the crema layer too thin, thick, good?

Grind size, extraction time, dosage amount, water volume and temperature all influence these factors.

Based on these questions, the coffee machine (10) is arranged to provide new settings, or to provide the user advice on new settings of the coffee machine (10), one thing and another depending on input received from the user through the interface (30). In this way the user can be guided to fine-tune the cup of coffee to be prepared as desired in order to get optimum results from the coffee machine of the invention.

## Claims

1. Coffee machine (10) provided with a brewer (50), which brewer is provided with a brewing chamber (59) which is equipped for receiving ground coffee, and which brewer is equipped with a piston (55, 56) which is movable in the brewer (50) for tamping the ground coffee, wherein the coffee machine (10) is further provided with an input interface (30) enabling an operator to select a desired amount (31) of ground coffee to be supplied to the brewing chamber (59), and to select an amount (32) of brewing water to be used during extraction of the coffee, **characterized in that** the input interface (30) is equipped to receive a setpoint (33) for a desired extraction time, and that the coffee machine (10) is further provided with a flowmeter (64) for measuring an actual flow of the brewing water during extraction, wherein the flowmeter (64) is connected to a controller (40), and the controller (40) is arranged to drive the piston (56) to a position which causes the actual flow of the brewing water to be set at a value which corresponds to eventually using the full amount of brewing water in exactly the desired extraction time.

2. Coffee machine according to claim 1, **characterized in that** a grain size of crushed particles in the ground coffee is maintained constant in between different settings of coffee according to a predefined recipe.

3. Coffee machine according to claim 2, **characterized in that** any recipe is defined by the following parameters, said parameters only pertaining to one setting of coffee:
a desired amount (31) of ground coffee to be supplied to the brewing chamber,
an amount (32) of brewing water to be used during extraction of the coffee,
a desired extraction time (33),
and that for any new recipe an estimated desired piston (56) position is established by measuring an actual flow of brewing water with a particular setting of the piston (56) position and a preset weight (31) of the ground coffee according to the new recipe, which estimated desired piston (56) position is used as an initial setting of the piston during a first regular setting of coffee according to this new recipe.

4. Coffee machine according to claim 3, **characterized in that** in a calibration step that precedes execution of any new recipe, the machine estimates a grain size of the ground coffee, which grain size is used to establish an optimum size of the brewing chamber in relation to the amount of ground coffee to be received therein, and to establish whether the grinder is in its optimal working range.

5. Coffee machine according to claim 4, **characterized in that** the calibration step comprises exercising full force with the piston on a known amount of ground coffee received in the brewing chamber, and determining the piston position that corresponds to said exercising of full force, wherein the piston position is used as a measure for the grain size of the ground coffee.

6. Coffee machine according to any one of the previous claims 1-5, **characterized in that** the input interface (30) enables an operator to dispose of a remaining amount of ground coffee from the grinder (20), when a predefined time has passed since the last setting of coffee.

7. Coffee machine according to any one of the previous claims 1-6, **characterized in that** the input interface (30) is equipped to ask the user one or more of the following questions:
- is the coffee: sour, bitter, good?
- is the coffee strong, weak, good?
- is the volume too small, big, good?
- is the coffee too cold, hot, good?
- is the crema layer too thin, thick, good?
and that the coffee machine (10) is arranged to provide new settings or to provide the user advice on new settings of the coffee machine (10) depending on input received from the user through the interface (30).

8. Coffee machine according to any one of the previous claims 1-7, **characterized in that** prior to extraction of the ground coffee, a predefined minute amount of brewing water preheats at least part of the coffee machine (10).
